# EUROPÄISCHE PATENTSCHRIFT

(11) **EP 1 389 175 B1**
(45) Veröffentlichungstag und Bekanntmachung des Hinweises auf die Patenterteilung: **26.07.2006**
(21) Anmeldenummer: 02735366.3
(22) Anmeldetag: 17.05.2002
(51) Int. Cl.: C07B 61/02, B01J 19/00, B01J 19/26, B01J 19/24

(54) **VERFAHREN ZUR DURCHFÜHRUNG VON RADIKALISCHEN GASPHASENREAKTIONEN**
METHOD TO ACHIEVE RADICAL GAS PHASE REACTIONS
PROCEDE POUR REALISER DES REACTIONS RADICALAIRES EN PHASE GAZEUSE

(30) Priorität: 19.05.2001 DE 10124447
(43) Veröffentlichungstag der Anmeldung: 18.02.2004
(73) Patentinhaber: Siemens AG, 80333 München (DE)
(72) Erfinder: HEINICHEN, Holger, 63067 Offenbach (DE); HEYL, Andreas, CH-3912 Termen (CH); APPEL, Jörg, 84524 Neuötting (DE)
(86) Internationale Anmeldenummer: PCT/EP2002/005485
(87) Internationale Veröffentlichungsnummer: WO 2002/094743

(56) Entgegenhaltungen:
- US-A- 3 282 652

## Beschreibung

Die Erfindung betrifft ein Verfahren zur Durchführung von radikalischen Gasphasenreaktionen.

Bei radikalischen Gasphasenreaktionen erfolgt die Zugabe von Radikalen über Radikalbildner, die üblicherweise in den Reaktor eingespeist werden und dort die Radikale bilden, die in das Reaktionsgeschehen eingreifen. Dabei werden meistens solche Radikalbildner eingesetzt, die durch thermischen Zerfall Radikale bilden. Bei technisch verwendeten Radikalbildnern sind zum Zerfall Temperaturen in Höhe von mindestens etwa 500°C notwendig. Hohe Temperaturen führen zu einem starken Zerfall und zu einer hohen Menge an Radikalen.

In der Technik werden eine Reihe von Radikalbildnern eingesetzt. Beispiele dazu sind aus JP 4159238, JP 1052731, JP 3156734, DE 3543222, EP 195719, US 4590318, US 4584420, EP 172596, DE 3328691 und RO 84803 bekannt.

Reaktanten radikalisch verlaufender Gasphasenreaktionen sind häufig kohlenstoffhaltige Verbindungen. Bei den bekannten Prozessen kommt es in der Regel zu kohlenstoffhaltigen Ablagerungen an den Reaktorwänden, die die Betriebsdauer der Reaktoren begrenzen. Zur Vermeidung bzw. Verringerung solcher Ablagerungen und Nebenreaktionen ist aus reaktionstechnischer Sicht eine niedrige Temperatur für die Reaktion im Reaktor zu wählen. Die Reaktionstemperatur ist daher in der Praxis ein Kompromiss zwischen der einerseits gewünschten hohen Temperatur zur Bildung einer ausreichenden Menge an Radikalen und andererseits aus einer möglichst niedrigen Temperatur zur Vermeidung von Ablagerungen. Weiterhin liegt durch die Wahl der Reaktionstemperatur oft auch der Umsatzgrad der Reaktion fest, was eine entsprechende Rückführung der nicht umgesetzten Edukte notwendig macht.

In wenigen Anwendungsfällen werden Radikale extern erzeugt und einem Prozess zugespeist. Die US 4874459 beschreibt einen Apparat und einen Prozess, in dem Oberflächen durch einen Strahl aus Chlorradikalen geätzt werden können. Die Chlorradikale werden aus einem Strom von Chlormolekülen erzeugt, die durch Mikrowellen gespalten werden. Die Richtung und die Intensität des Radikalstromes werden gesteuert und geregelt. Die EP 0938251 beschreibt einen Apparat, der einen Strahl von Atomen oder Radikalen durch thermische Dissoziation eines Gases erzeugt. Dazu wird ein Gas in ein Rohr eingeleitet und durch Wärmestrahlung bei etwa 1500 K bis 2500 K zur Dissoziation gebracht. Dieses Verfahren hat gegenüber den bisherigen Vorrichtungen den Vorteil, dass die Verunreinigung des Gases mit Ionen reduziert wird. Die EP 447993 beschreibt eine Methode und einen Apparat, in dem Radikale - extern auf unterschiedlichste Weise erzeugt - in die Zuleitung einer Turbomolekularpumpe gespeist werden. Dadurch kann ein Kessel besser von Wasserstoff evakuiert werden, da die Radikale mit Wasserstoff zu höher molekularen Molekülen reagieren, die besser abgepumpt werden können. Die US 4878994 und US 4855016 beschreiben einen Apparat zur Bearbeitung von Titan- oder Aluminiumfilmen in einer Prozesskammer, in welcher freie Radikale in-situ erzeugt oder über eine Leitung zugespeist werden. Die zugespeisten Radikale werden durch ein Plasma, z. B. bestehend aus CCl₄ und Inertgas, in einem Plasmagenerator erzeugt. Die EP 697374 beschreibt die Kombination eines statisches Mischers mit einer Strahlenquelle, um Fluide von außen intensiv mit UV-Licht bestrahlen zu können. Vorteile werden in der Vermischung bei gleichzeitiger Bestrahlung (gekennzeichnet durch geringe Eindringtiefe) gesehen.

Alle diese bekannten Beispiele liegen außerhalb des Bereiches einer Anwendung zur Zuspeisung von Radikalen bei einer radikalisch verlaufenden Gasphasenreaktion und sind nicht geeignet, den Anforderungen an die Einspeisung von Radikalen in eine radikalisch verlaufende Gasphasenreaktion zu genügen.

Der Erfindung liegt daher die Aufgabe zugrunde, die Durchführung von radikalischen Gasphasenreaktionen dahingehend zu verbessern, dass einerseits die Reaktionstemperatur möglichst niedrig gehalten werden kann, andererseits aber eine ausreichende Menge an Radikalen zur Reaktion zur Verfügung steht.

Gemäß der Erfindung wird die Aufgabe durch das in Anspruch 1 angegebene Verfahren zur Durchführung von radikalischen Gasphasenreaktionen gelöst.

Bei dem erfindungsgemäßen Verfahren sind die Bildung der Radikalspezies und die Reaktion der Reaktanten entkoppelt. Dadurch können sowohl für die Bildung der Radikale als auch für die Reaktion die jeweils optimalen Bedingungen gewählt werden. Das Entkoppeln wird erreicht, indem Radikale außerhalb des Reaktors erzeugt und dann an einer oder vorzugsweise mehreren Stellen in den Reaktor gespeist werden. Eine zusätzliche Einspeisung von Radikalbildnern in den Reaktor ist weiterhin möglich.

Durch Anzahl und Ort der Einspeisestellen und durch die Menge der eingespeisten Radikale kann die lokale Radikalkonzentration im Reaktor gesteuert werden. Der Ort des Zuspeisens der Radikale kann dabei so gewählt sein, dass Umsatz und Selektivität der Reaktion, hier insbesondere der Nebenreaktionen, die zu Ablagerungen im Reaktor führen, gesteuert werden. Die zugespeisten Radikale "verbrauchen" sich u. U. durch Reaktion, so dass Radikalkonzentrationen im Reaktor variieren können. Durch entsprechende Anpassung von Menge und Ort des Einspeisens von Radikalen, kann die Radikalkonzentration im Reaktor wieder erhöht werden. Die Radikale können von unterschiedlichen Radikalbildnern wie z. B. Tetrachlorkohlenstoff, Chlor oder andere Substanzen stammen, die durch Zuführen von thermischer Energie Radikale bilden, die dann gasförmig in den Reaktor eingespeist werden können.

Die gasförmigen Reaktanten können dem Reaktor kontinuierlich zugespeist werden oder diskontinuierlich vorgelegt sein. Vorzugsweise ist der Reaktor als ein kontinuierlich mit den Edukten beströmter Rohrreaktor ausgebildet.

Die dem erfindungsgemäße Verfahren zugrunde liegenden Reaktionen liegen in einem Temperaturbereich von 25 °C bis 1800 °C bevorzugt zwischen 100 °C und 1000 °C und besonders bevorzugt zwischen 300 °C und 700 °C, in einem Druckbereich zwischen 0,01 bar abs und 80 bar abs, bevorzugt zwischen 1 bar abs und 40 bar abs. Die Radikalspezies können bei Temperaturen im Bereich von 500 °C bis 2800°C erzeugt werden.

Die Zuspeisung der Radikale sollte schnell und effizient erfolgen, wobei die Einmischzeit der Radikale in die Reaktanten vorzugsweise unterhalb der Lebenszeit der Radikale liegt. Die Mischung mit den Reaktanten sollte ferner innig sein, damit die Radikale auf gewünschte Weise in das Reaktionsgeschehen der Reaktanten eingreifen können. Die Einspeisung erfolgt dazu in vorteilhafter Weise über eine Düse, die derart gestaltet ist, dass sie im Zusammenwirken mit dem Reaktor eine schnelle und innige Vermischung der Radikale mit den Reaktanten bewirkt und die Anlagerung von Nebenprodukten, wie z. B. Ruß, minimiert. Alternativ könnte die Einspeisung z. B. hinter einem eingebauten Gitter zum Erzeugen hoher Turbulenz erfolgen oder in Gebieten mit hoher Sekundärströmung, die durch starke Richtungsänderung der Strömung erzeugt wird.

Die Verweilzeit der Radikale vom Ort ihrer Erzeugung bis zu ihrer Einspeisung in den Reaktor sollte deutlich unter der Lebenszeit der Radikale liegen. Dies lässt sich dadurch erreichen, dass die Radikale nah am Ort ihrer Einspeisung in den Reaktor erzeugt und durch eine kurze Kopplung - vorzugsweise unter den Reaktionsbedingungen des Reaktors wie Temperatur und Druck - in den Reaktor eingespeist werden. Das wird bevorzugt dadurch erreicht, dass die Einspeisung der Radikalspezies über mindestens eine Leitung erfolgt, die den Reaktor mit mindestens einem Vorratsbehälter für die Radikalbildner verbindet, und dass die Radikalspezies in der mindestens einen Leitung erzeugt werden, wobei die Länge der Leitung so bemessen ist, dass die Verweilzeit der Radikalspezies in der Leitung kleiner als die Lebensdauer der Radikalspezies ist.

Eine zur Durchführung des erfindungsgemäßen Verfahrens dienende Vorrichtung kann unter den bei radikalisch verlaufenden Gasphasenreaktionen vorherrschenden Reaktionsbedingungen, insbesondere Temperatur und Druck, betrieben werden. Da für den thermischen Zerfall der Radikalbildner höhere Temperaturen als für die radikalisch verlaufende Gasphasenreaktion notwendig sind, wird. die entsprechende Temperaturdifferenz durch eine zusätzliche geeignete Beheizung der mindestens einen Leitung erzielt.

Zur weiteren Erläuterung der Erfindung wird im Folgenden auf die Figuren der Zeichnung Bezug genommen; im Einzelnen zeigen:
- Figur 1: eine schematische Darstellung des erfindungsgemäßen Verfahrens und
- Figur 2: ein Beispiel für eine Vorrichtung. zur Durchführung des erfindungsgemäßen Verfahrens.

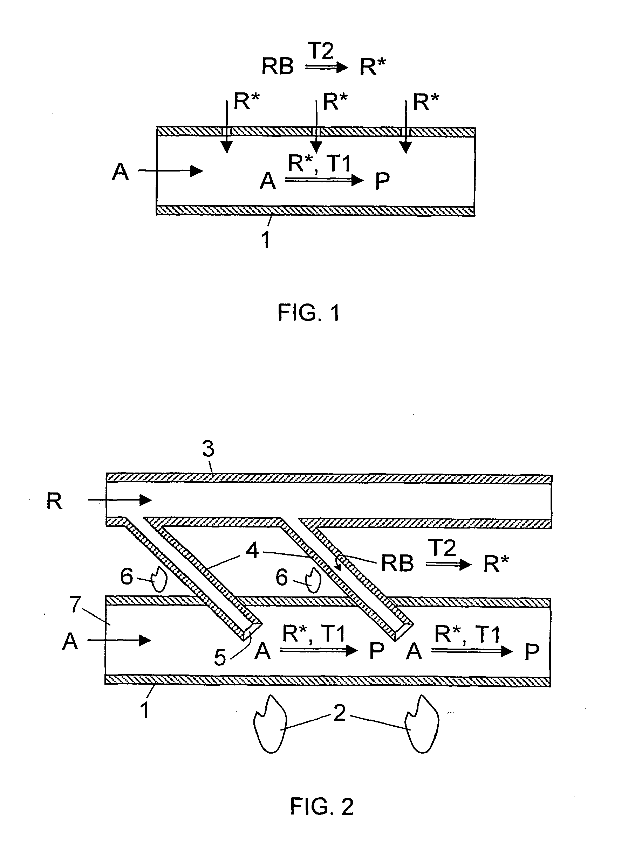

Figur 1 zeigt einen kontinuierlich betriebenen Rohrreaktor 1, in den Edukte (Reaktanten) A eingeleitet werden und dort bei einer ersten Temperatur T1 in Gegenwart von Radikalen R* zu Produkten P reagieren. Die Radikalen R* werden außerhalb des Reaktors 1 bei einer zweiten Temperatur T2 > T1 aus Radikalbildnern RB durch thermischen Zerfall erzeugt und anschließend in den Reaktor 1 mit den darin enthaltenen Edukten A eingespeist.

Als Beispiel für das erfindungsgemäße Verfahren wurde eine Modellrechnung zur Pyrolyse von 1,2-Ethandichlorid (1,2-Dichlorethan) zu Vinylchlorid durchgeführt. Das Reaktormodell beschreibt dabei den Verlauf der chemischen Reaktionen des Prozesses in Abhängigkeit von der Verweilzeit im Reaktor 1. Hierzu wurde ein Netzwerk von chemischen Reaktionen angewendet, welches kinetische Daten aus der Literatur (G. P. Miller: "The Structure of a Stoichiometric CCl₄-CH₄-Air Flat Flame", Combust. Flame 101 (1995), S. 101) enthält und für diesen Prozess validiert ist. Dieses Reaktionsnetzwerk beschreibt die Hauptreaktion von 1,2-Dichlorethan zu Vinylchlorid und die wichtigsten Nebenreaktionen, so dass eine Tendenz zur Bildung von Ablagerungen abgeleitet werden kann. In einer vergleichenden Simulation der Reaktionsführung zwischen dem Stand der Technik (Zuspeisen des Radikalbildners RB am Eingang des Reaktors 1) und der erfindungsgemäßen Reaktionsführung (Zuspeisen von Zerfallsprodukten, darunter Radikalen R*, aus der Pyrolyse von CCl₄ zu Beginn des Reaktors 1 ohne weitere Einspeisung) wurde ein mindestens doppelt so hoher Umsatz im Fall der erfindungsgemäßen Reaktionsführung berechnet. Folgende Reaktionsbedingungen wurden simuliert: Temperatur 700 K, Druck: 22 bar, Molanteil Ethandichlorid: 99,5 %, Molanteil Tetrachlorkohlenstoff 0,5 %, Verweilzeit 10 s. Im Fall der Simulation zum Stand der Technik wurde der Radikalbildner Tetrachlorkohlenstoff dem Reaktant Ethandichlorid zugegeben. Im Fall des erfindungsgemäßen Verfahrens wurden die Zerfallsprodukte, darunter Radikale, des bei 1000 °C pyrolysierten Radikalbildners in den Reaktantenstrom eingespeist. Es wurde das Programm Senkin aus dem Paket CHEMKIN III der Firma Reaction Design (Reaction Design; 6440 Lusk Blvd. Suite D-209; San Diego, CA 92121; USA) für die Simulation verwendet.

Im Folgenden wird anhand von Figur 2 eine Vorrichtung zur Durchführung des erfindungsgemäßen Verfahrens am Beispiel eines Rohrreaktors 1 erläutert, in den über einen Einlass 7 die Reaktanten A kontinuierlich eingespeist werden und der mittels einer Heizeinrichtung 2 auf eine Reaktionstemperatur T1 erwärmt wird. Parallel zu dem Reaktor 1 ist ein Vorratsbehälter 3 in Form eines Rohres für Radikalbildner RB vorgesehen ist. In einer, oder wie hier gezeigt mehreren kurzen Leitungen 4 zwischen dem Vorratsbehälter 3 und dem Reaktor 1 werden die Radikalbildner RB thermisch gespalten, wobei die Zerfallsprodukte, darunter Radikale R*, über Düsen 5 an den Enden der Leitungen 4 in den Reaktor 1 eingespeist werden. Die Menge der eingespeisten Radikale R* ist deutlich geringer als die Menge der Reaktanten A.

Zur thermischen Spaltung der Radikalbildner RB sind separate Heizungen 6, z. B. Erdgasbefeuerung, an den Leitungen 4 vorgesehen. Die Temperatur T2 > T1 in den Leitungen 4 wird bevorzugt derart geregelt, dass es zu einem ausreichenden Zerfall des Radikalbildners RB kommt.

Der Reaktor 1 und die Leitungen 4 und ggf. der Vorratsbehälter 3 können sich auch in einem hier nicht gezeigten Ofen befinden, der die für die Reaktion erforderliche Temperatur T1 erzeugt, wobei dann die separaten Heizungen 6 nur noch die Temperaturdifferenz T2 - T1 zur Erzeugung der Temperatur T2 liefern müssen. Es ist auch denkbar, den Rohrreaktor 1 für eine kurze Strecke außerhalb des Ofens geführt wird und an dieser Stelle die Radikale einzuspeisen. Dann könnten die Radikale zwar in der Nähe der Einspeisestelle, aber nicht unter den Bedingungen der Reaktion oder des Ofens erzeugt werden.

## Patentansprüche

1. Verfahren zur Durchführung von radikalischen Gasphasenreaktionen, wobei ein oder mehrere Edukte (A) in einen Reaktor (1) geleitet werden und dort bei einer ersten Temperatur (T1) in Gegenwart von einer oder mehreren Radikalspezies (R*) zu einem oder mehreren Produkten (P) reagieren und wobei die Radikalspezies (R*) außerhalb des Reaktors (1) bei einer zweiten Temperatur (T2), die höher als die erste Temperatur (T1) ist, aus Radikalbildnern (RB) durch thermischen Zerfall erzeugt und anschließend in den Reaktor (1) mit den darin enthaltenen Edukten (A) eingespeist werden.

2. Verfahren nach Anspruch 1, **dadurch gekenn-** z e i c h n e t , dass die erste Temperatur (T1) im Bereich von 25 °C bis 1800 °C, insbesondere von 100 °C bis 1000 °C und dabei insbesondere von 300 °C bis 700 °C, liegt.

3. Verfahren nach Anspruch 1 oder 2, **dadurch ge- kennzeichnet**, dass die zweite Temperatur (T2) im Bereich von 500 °C bis 2800 °C liegt.

4. Verfahren nach einem der vorangehenden Ansprüche, **da- durch gekennzeichnet**, dass die Reaktion bei Drücken im Bereich von 0,01 bar abs bis 80 bar abs, insbesondere von 0,01 bar abs bis 40 bar abs, durchgeführt wird.

5. Verfahren nach einem der vorangehenden Ansprüche, **da- durch gekennzeichnet**, dass die Radikalspezies (R*) an mehreren unterschiedlichen Stellen in den Reaktor (1) eingespeist werden.

## Claims

1. Process for carrying out free-radical gas-phase reactions, in which one or more starting materials (A) are introduced into a reactor (1) and react there at a first temperature (T1) in the presence of one or more free radical species (R*) to form one or more products (P) and the free radical species (R*) are generated outside the reactor (1) from free-radical formers (RB) by thermal decomposition at a second temperature (T2) which is higher than the first temperature (T1) and are subsequently fed into the reactor (1) with the starting materials (A) present therein.

2. Process according to Claim 1, **characterized in that** the first temperature (T1) is in the range from 25°C to 1800°C, in particular from 100°C to 1000°C and especially from 300°C to 700°C.

3. Process according to Claim 1 or 2, **characterized in that** the second temperature (T2) is in the range from 500°C to 2800°C.

4. Process according to any of the preceding claims, **characterized in that** the reaction is carried out at pressures in the range from 0.01 bar abs to 80 bar abs, in particular from 0.01 bar abs to 40 bar abs.

5. Process according to any of the preceding claims, **characterized in that** the free radical species (R*) are fed into the reactor (1) at a plurality of different points.

## Revendications

1. Procédé pour effectuer des réactions radicalaires en phase gazeuse, en envoyant un ou plusieurs éduits (A) dans un réacteur (1) et en les y faisant réagir à une première température (T1) en présence d'une ou de plusieurs espèces (R*) radicalaires pour donner un ou plusieurs produits (P), et les espèces (R*) radicalaires étant produites à l'extérieur du réacteur (1) à une deuxième température (T2), qui est plus haute que la première température (T1), à partir de producteurs (RB) de radicaux par décomposition thermique et étant introduites ensuite dans le réacteur (1) avec les éduits (A) qui y sont contenus.

2. Procédé suivant la revendication 1, **caractérisé en ce que** la première température (T1) est de l'ordre de 25°C à 1800°C, notamment de 100°C à 1000°C, et plus particulièrement de 300°C à 700°C.

3. Procédé suivant la revendication 1 ou 2, **caractérisé en ce que** la deuxième température (T2) est de l'ordre de 500°C à 2800°C.

4. Procédé suivant l'une des revendications précédentes, **caractérisé en ce que** l'on effectue la réaction sous des pressions de l'ordre de 0,01 bar absolu à 80 bars absolus, notamment de 0,01 bar absolu à 40 bars absolus.

5. Procédé suivant l'une des revendications précédentes, **caractérisé en ce que** l'on introduit les espèces (R*) radicalaires en plusieurs endroits différents dans le réacteur (1).
